# EUROPÄISCHE PATENTSCHRIFT

(11) **EP 0 638 349 B1**
(45) Veröffentlichungstag und Bekanntmachung des Hinweises auf die Patenterteilung: **19.08.1998**
(21) Anmeldenummer: 94110065.3
(22) Anmeldetag: 29.06.1994
(51) Int. Cl.: B01D 53/04, B01D 53/94, F01N 3/28

(54) **Verwendung eines Zeolithen zum Schutz eines Katalysators für die Reinigung der Abgase von Verbrennungskraftmaschinen vor Katalysatorgiften**
Use of a zeolite for preventing poisoning of combustion engine exhaust gas purification catalyst
Utilisation d' un zéolite pour empecher l'empoisonnement de catalysateurs de purification de gaz d' échappement de moteurs à combustion

(30) Priorität: 04.08.1993 DE 4326121
(43) Veröffentlichungstag der Anmeldung: 15.02.1995
(73) Patentinhaber: Degussa Aktiengesellschaft, 60311 Frankfurt (DE)
(72) Erfinder: Lindner, Dieter, Dr., D-63457 Hanau (DE); Lox, Egbert, Dr., D-63457 Hanau (DE); Engler, Bernd, Dr., D-63457 Hanau (DE); Ostgathe, Klaus, D-65933 Frankfurt am Main (DE)

(56) Entgegenhaltungen:
- EP-A- 0 149 966
- EP-A- 0 161 743
- EP-A- 0 439 010
- EP-A- 0 541 271
- DE-A- 3 719 138
- DE-A- 3 842 282
- DE-A- 4 039 952
- FR-A- 2 376 698
- DATABASE WPI Section Ch, Week 9029, Derwent Publications Ltd., London, GB; Class E36, AN 90-220900 & JP-A-2 149 715 (TOYO KOGYO KK) 8. Juni 1990

## Beschreibung

Die Erfindung betrifft die Verwendung eines Adsorbers zum Schutz von Katalysatoren für die Reinigung der Abgase von Verbrennungskraftmaschinen vor Katalysatorgiften.

In den zukünftigen Vorschriften für die zulässigen Emissionen von Schadstoffen beim Betrieb eines Kraftfahrzeugs (TLEV/1994 und LEV/1997; LEV = Low Emission Vehicle) werden nicht nur die Obergrenzen für die Schadstoffe Kohlenmonoxid, Kohlenwasserstoffe und Stickoxide erheblich gegenüber den heute gültigen Werten herabgesetzt, sondern auch zusätzliche Forderungen an die Lebensdauer der Katalysatoren gestellt. Demnach muß die Lebensdauer eines Katalysators ab 1994 mindestens 100.000 Meilen Fahrleistung betragen.

Ursachen für einen vorzeitigen Ausfall eines Katalysators kann neben einer thermischen Schädigung des Katalysators durch Überhitzung die allmähliche Akkumulation von Katalysatorgiften sein. Als Katalysatorgifte wirken insbesondere für die überwiegend in der Autoabgaskatalyse eingesetzten Edelmetallkatalysatoren die Elemente Blei, Phosphor, Schwefel und Zink. Diese Elemente sind in Spuren in den Kraftstoffen oder im Motorenöl als Öladditive vorhanden, können aber auch als Abrieb mit dem Abgasstrom aus der Verbrennungskraftmaschine ausgetragen werden.

Blei ist eines der bekanntesten Katalysatorgifte. Seine Bedeutung hat jedoch durch den Einsatz von bleifreien Kraftstoffen für Verbrennungsmotoren abgenommen. Für alle genannten Katalysatorgifte gilt aber, daß wegen der zu garantierenden Leistungsdaten über eine Fahrleistung von 100.000 Meilen auch schon Spurenanteile im Abgas die Lebensdauer der Katalysatoren erheblich herabsetzen können und deshalb möglichst vollständig aus dem Abgas entfernt werden müssen.

In der DE-A-31 46 004 wird vorgeschlagen, die aus verbleiten Kraftstoffen stammenden Anteile von Blei im Abgas dadurch zu entfernen, daß man das Abgas, ehe es mit dem Katalysator in Berührung kommt, mit einem Phosphat oder einem dieses enthaltenden temperaturbeständigen Trägermaterial in Berührung bringt. Über die Wirkung dieses Verfahrens auf die übrigen Katalysatorgifte wird nichts ausgesagt. Es besteht jedoch die Gefahr, daß mit diesen phosphathaltigen Adsorbern die Bleianteile im Abgas zu Lasten einer erhöhten Phosphorfracht verringert werden.

Die EP-A-0 541 271 beschreibt ein Katalysatorsystem zur Reduktion von Stickoxiden in sauerstoffhaltigen Abgasen von mager betriebenen Verbrennungskraftmaschinen. Das Katalysatorsystem besteht aus einem ein Übergangsmetall enthaltenden Zeolith-Katalysator und einem nachfolgenden Dreiweg-Katalysator. Als Zeolith-Katalysator wird bevorzugt ein mit Kupfer ausgetauschter ZSM5-Zeolith verwendet.

Die De-A-40 39 952 beschreibt die Verwendung eines Zeolith-Adsorbers für die temporäre Speicherung von Kohlenwasserstoffen aus dem Abgas während der Startphase eines Otto-Motors. Bei steigender Abgastemperatur werden die Kohlenwasserstoffe wieder desorbiert.

Aufgabe der vorliegenden Erfindung ist es, einen Adsorber anzugeben, mit dem nach Möglichkeit alle Katalysatorgifte weitgehend aus dem Abgas entfernt werden.

Diese Aufgabe wird gelöst durch die Verwendung eines Adsorbers aus einem hochtemperaturbeständigen Zeolithen oder aus einer Mischung verschiedener hochtemperaturbeständiger Zeolithe zum Schutz eines Katalysators für die Reinigung der Abgase von Verbrennungskraftmaschinen vor Katalysatorgiften.

In einer Ausführungsform der Verwendung des Adsorbers kann er als Beschichtung auf einem monolithischen Tragkörper in Honigwabenform aus Keramik oder Metall vorliegen, welcher sich vor dem Katalysator im Abgasstrom befindet. Einen besonders geringen Abgasgegendruck erhält man, wenn der Adsorber selbst als Beschichtung auf der eigentlichen katalytischen Beschichtung des Katalysators aufgebracht ist.

Wesentlich für die Wirkungsweise der Verwendung des Adsorbers ist es, daß der Adsorber während aller Betriebsphasen der Verbrennungskraftmaschine und während der gesamten Lebensdauer des Abgaskatalysators seine Adsorptionswirkung entfalten kann. Für die Verminderung der Kohlenwasserstoffemissionen während der Kaltstartphase wurden schon Anordnungen aus einem Katalysator mit vorgeschaltetem Adsorber vorgeschlagen, bei denen der Adsorber nur während der Kaltstartphase in den Abgasstrom eingeschaltet wird und während der Dauerbetriebsphase zur Vermeidung von thermischen Überlastungen und Druckverlusten mittels einer Umweg-Leitung kurzgeschlossen wird. Solche "Bypass"-Lösungen sind nicht geeignet, einen Katalysator wirkungsvoll vor Vergiftung zu schützen, da der Adsorber dabei nur während einer kurzen Betriebsphase in den Abgasstrom eingeschaltet ist.

Die Verwendung des Adsorbers ist natürlich nicht nur auf den Einsatz bei der Autoabgasreinigung beschränkt, sondern läßt sich mit Vorteil auch auf verwandten Gebieten wie zum Beispiel der Abgasreinigung von Stationärmotoren und Gasturbinen anwenden.

Als Adsorber für die Katalysatorgifte sind ein dealuminierter Mordenit sowie ein Y-Zeolith mit SiO₂/Al₂O₃-Molverhältnissen von größer 8 und/oder ein Zeolith ZSM-5 geeignet, die noch innerhalb ihrer Ionenaustauschkapazität mit den Elementen Kupfer, Eisen, Natrium und/oder Kalium ausgetauscht sein können oder aber in der sauren H-Form vorliegen. Die genannten Zeolithe eignen sich wegen ihrer großen spzifischen Oberfläche von mehr als 700 m²/g (BET-Oberfläche bestimmbar durch Aufnahme von Stickstoffadsorptionsisothermen nach DIN 61132) sehr gut zur Adsorption der Katalysatorgifte. Diese hohe spezifische Oberfläche bleibt wegen des großen SiO₂/Al₂O₃-Molverhältnisses auch noch bis zu Temperaturen von 1000° C erhalten.

In den folgenden Beispielen werden Adsorber und Katalysatoren auf monolithischen Wabenkörpern aus Cordierit mit 62 Zellen pro cm² und Stegdicken von 0,16 mm eingesetzt.

### Beispiel 1

Es wurde ein Wabenkörper mit einer katalytischen Beschichtung für konventionelle Pt/Rh-Dreiweg-Katalysatoren gemäß DE 40 03 939, Beispiel 5, mit einer Edelmetallbeladung (Pt : Rh = 2,5 : 1) von 0,88 Gramm pro Liter Katalysatorvolumen versehen. Dieser Katalysator wird im folgenden mit K1 bezeichnet. Ein weiterer Wabenkörper wurde als Adsorber für Katalysatorgifte mit Zeolith DAY (100 g/l Wabenkörpervolumen) beschichtet. Dieser Adsorber A und Katalysator K1 wurden hintereinander in einen Abgaskonverter eingebaut.

### Vergleichsbeispiel 1

Es wurde ein zu K1 identischer Katalysator K2 angefertigt und hinter einen unbeschichteten Wabenkörper in einen zweiten Abgaskonverter eingebaut.

Der unbeschichtete Wabenkörper V diente zur Einstellung identischer Strömungsbedingungen in beiden Abgaskonvertern.

### Anwendungstechnische Prüfungen

Beide Abgaskonverter wurden einer 50-stündigen Alterung im Abgasstrom eines Motors bei Temperaturen von 780° C unterworfen. Dazu wurde das Abgas des Motors in zwei identische Teilströme geteilt und diese parallel über beide Abgaskonverter geleitet.

Nach dieser Alterung wurden die Abgaskonverter zur Prüfung des Anspringverhaltens der Katalysatoren K1 und K2 demontiert. Das Anspringverhalten wurde in einer Modellgasanlage bei Raumgeschwindigkeit von 50.000 h⁻¹ und einer von 75 bis auf 450° C mit 20° C/min. stetig ansteigenden Abgastemperatur bei zwei Luftzahlen λ (normiertes Luft-Kraftstoffverhältnis) untersucht. Die dabei ermittelten "light-off"-Temperaturen für die Schadstoffe CO, HC und NOₓ, das sind die Temperaturen, bei denen 50 % des Jeweiligen Schadstoffs konvertiert werden, sind in Tabelle 1 aufgeführt.

**Tabelle 1**

| Ergebnisse der Modellgasuntersuchungen (Angaben in °C für einen 50 %igen Umsatz des jeweiligen Schadstoffes) | | | | | | |
|---|---|---|---|---|---|---|
| Katalysator | lambda = 0.98 | | | lambda = 1.01 | | |
| | CO | HC | NOₓ | CO | HC | NOₓ |
| K1 | 259 | 325 | 249 | 249 | 252 | 247 |
| K2 | 275 | 325 | 261 | 249 | 253 | 246 |

Tabelle 1 zeigt, daß bei Vorschaltung eines mit DAY beschichteten Wabenkörpers der Dreiwegkatalysator vor Vergiftung geschützt werden kann. Katalysator K1 weist im fetten Abgas (lambda = 0.98) nach Motoralterung deutlich niedrigere Anspringtemperaturen für CO und NOₓ auf als Katalysator K2, vor den nur ein unbeschichteter Wabenkörper geschaltet war.

Die katalytische Wirkung im fetten Abgas beruht im wesentlichen auf der Rhodium-Komponente des Katalysators, die mit Hilfe des Adsorbers wirkungsvoll vor Vergiftung geschützt werden kann.

## Patentansprüche

1. Verwendung eines Adsorbers aus einem hochtemperaturbeständigen Zeolithen oder aus einer Mischung verschiedener hochtemperaturbeständiger Zeolithe zum Schutz eines Katalysators für die Reinigung der Abgase von Verbrennungskraftmaschinen vor Katalysatorgiften.

2. Verwendung nach Anspruch 1,
**dadurch gekennzeichnet**,
daß der Adsorber als Beschichtung auf einem monolithischen Tragkörper in Honigwabenform vorliegt, welcher sich vor dem Katalysator im Abgasstrom befindet.

3. Verwendung nach Anspruch 1,
**dadurch gekennzeichnet**,
daß der Adsorber als Beschichtung auf der eigentlichen katalytischen Beschichtung des Katalysators aufgebracht ist.

4. Verwendung nach einem der Ansprüchen 1 bis 3,
**dadurch gekennzeichnet**,
daß als Zeolithe dealuminierter Mordenit, dealuminierter Y-Zeolith und/oder Zeolith ZSM-5 mit SiO₂-Al₂O₃-Molverhältnissen von größer 8 eingesetzt werden.

5. Verwendung nach Anspruch 4,
**dadurch gekennzeichnet**,
daß die verwendeten Zeolithe mit Dotierungselementen dotiert sind, insbesondere mit den Elementen aus der Gruppe Cu, Fe, Na und/oder K oder in der sauren H-Form vorliegen.

6. Verwendung nach Anspruch 5,
**dadurch gekennzeichnet**,
daß die verwendeten Zeolithe innerhalb ihrer Ionenaustauschkapazität mit den Dotierungselementen dotiert sind.

## Claims

1. Use of an adsorber prepared from a high temperature-resistant zeolite or from a mixture of different high temperature-resistant zeolites, for protecting from catalyst poisons a catalytic converter for purifying combustion engine exhaust gases.

2. Use according to Claim 1, characterised in that the adsorber is present as a coating on a monolithic support body of honeycomb form which is located upstream of the catalytic converter in the exhaust gas stream.

3. Use according to Claim 1, characterised in that the adsorber is applied as a coating to the actual catalytic coating of the catalytic converter.

4. Use according to one of Claims 1 to 3, characterised in that dealuminised mordenite, dealuminised type Y zeolite and/or zeolite ZSM-5 having SiO₂ to Al₂O₃ molar ratios greater than 8 are utilised as zeolites.

5. Use according to Claim 4, characterised in that the zeolites used are doped with doping elements, in particular with the elements from the group comprising Cu, Fe, Na and/or K, or are present in the acid H form.

6. Use according to Claim 5, characterised in that the zeolites used are doped within their ion exchange capacity with the doping elements.

## Revendications

1. Utilisation d'un adsorbant en une zéolite résistant à une température élevée ou en un mélange de différentes zéolites résistant à haute température pour protéger un catalyseur destiné à la purification des gaz d'échappement de moteurs à combustion interne contre des poisons de catalyseur.

2. Utilisation selon la revendication 1,
caractérisée en ce que
l'adsorbant est présent comme revêtement sur un corps support monolithique en forme de nid d'abeilles qui se trouve en avant du catalyseur dans le courant de gaz d'échappement.

3. Utilisation selon la revendication 1,
caractérisée en ce que
l'adsorbant est appliqué comme revêtement sur le revêtement catalytique proprement dit du catalyseur.

4. Utilisation selon une des revendications 1 à 3,
caractérisée en ce que
comme zéolite on utilise de la mordenite désaluminisée, de la zéolite Y désaluminisée et/ou de la zéolite ZSM5 avec des rapports molaires SiO₂/Al₂O₃ supérieurs à 8.

5. Utilisation selon la revendication 4,
caractérisée en ce que
les zéolites utilisées sont dotées d'éléments de dopage, en particulier d'éléments du groupe Cu, Fe, NA et/ou K ou sous la forme H acide.

6. Utilisation selon la revendication 5,
caractérisée en ce que
les zéolites utilisées sont dotées à l'intérieur de leur capacité d'échanger des ions d'éléments de dopage.
